# EUROPÄISCHE PATENTSCHRIFT

(11) **EP 3 053 426 B1**
(45) Veröffentlichungstag und Bekanntmachung des Hinweises auf die Patenterteilung: **23.08.2017**
(21) Anmeldenummer: 15154004.4
(22) Anmeldetag: 05.02.2015
(51) Int. Cl.: A01C 5/06, A01C 7/20

(54) **Ausbringungsschar und Ausbringungsschuh**
Application coulter and application shoe
Soc d'épandage et sabot d'épandage

(43) Veröffentlichungstag der Anmeldung: 10.08.2016
(73) Patentinhaber: Kverneland AS, 4355 Kvernaland (NO)
(72) Erfinder: Beier, Carsten, 33154 Salzkotten (DE); Kottenstedde, Gregor, 59320 Ennigerloh (DE)
(74) Vertreter: Schweiger, Johannes

(56) Entgegenhaltungen:
- CA-A1- 1 268 379
- CA-A1- 2 252 252
- US-A- 4 669 922

## Beschreibung

Die vorliegende Erfindung betrifft ein Ausbringungsschar und einen Ausbringungsschuh gemäß den Oberbegriffen der nebengeordneten Ansprüche

Aus dem Stand der Technik sind Ausbringungsscharen bekannt. Bekannte Ausbringungsscharen weisen einen Ausbringungsschuh mit einem Ausbringungsgutauslauf, einen Befestigungsstiel und eine Scharspitze auf sowie zwei Schrauben zur Befestigung der Scharspitze am Befestigungsstiel und am Ausbringungsschuh. Herkömmlicherweise ist die obere der beiden Schrauben derart angeordnet, dass sie bzw. ihre zugeordnete Befestigungsmutter im Ausbringungsgutauslauf angeordnet ist. Dies hat den Nachteil, dass das geförderte Ausbringungsgut auf die Schraube bzw. die Mutter fallen kann und dadurch abgelenkt wird. Diese Ablenkung kann dazu führen, dass das Ausbringungsgut auf dem Boden ungleichmäßig verteilt wird, so dass das Aussäergebnis negativ beeinflusst wird.

Die Druckschrift CA 1268379 A1 offenbart ein Rohr, welches mit einem Schaft über einen Haltebügel verbunden ist. Die Druckschrift US 4,669,922 offenbart eine Halteplatte, die über ein Befestigungsmittel mit einem Ausbringungsschuh verbunden ist, wobei das Befestigungsmittel sich innerhalb des Ausbringungsgutauslaufs befindet. Die Druckschrift CA 2252252 offenbart eine Scharspitze 17, die über kreisförmige Aufnahmeöffnungen und darin befindlichen Befestigungselementen mit einem Stiel verbunden ist.

Es ist daher die Aufgabe der vorliegenden Erfindung, ein Ausbringungsschar und einen Ausbringungsschuh zur Verfügung zu stellen, die ein verbessertes Aussäergebnis liefern, eine vereinfachte Montage ermöglichen und/oder verringerte Herstellungskosten verursachen.

Diese Aufgabe wird mit dem Ausbringungsschar zur Ausbringung eines Ausbringungsgutes, insbesondere eines Saatgutes und/oder Düngemittels, und dem Ausbringungsschuh gemäß den nebengeordneten Ansprüchen gelöst.

Vorteilhafte Weiterbildungen der Erfindung sind in den Unteransprüchen angegeben. In den Rahmen der Erfindung fallen auch sämtliche Kombinationen aus zumindest zwei von in der Beschreibung, den Ansprüchen und/oder den Figuren angegebenen Merkmalen. Bei angegebenen Wertebereichen sollen auch innerhalb der genannten Grenzen liegende Werte als Grenzwerte offenbart oder in beliebiger Kombination beanspruchbar sein.

Erfindungsgemäß weist das Ausbringungsschar, das, insbesondere durch eine Zugmaschine, in eine Fahrtrichtung bewegt wird, auf:
- einen Ausbringungsschuh mit einem Ausbringungsgutauslauf,
- einen Befestigungsstiel,
- eine Scharspitze,
- mindestens ein Befestigungsmittel zur verdrehsicheren Befestigung der Scharspitze am Befestigungsstiel und am Ausbringungsschuh, wobei sich das mindestens eine Befestigungsmittel in einer durch eine Vertikalrichtung und die Fahrtrichtung aufgespannten Befestigungsmittelebene erstreckt, wobei das mindestens eine Befestigungsmittel außerhalb des Ausbringungsgutauslaufs angeordnet ist.

Im Folgenden werden, soweit nicht anders angegeben, Richtungsangaben oder Positionsangaben immer in Bezug auf die Fahrtrichtung angegeben. Mit der oben genannten Vertikalrichtung ist diejenige Richtung gemeint, die sich senkrecht zum bearbeiteten Erdboden erstreckt.

Der Grundgedanke der Erfindung besteht darin, das mindestens eine Befestigungsmittel derart anzuordnen, dass es außerhalb des Ausbringungsgutauslaufs angeordnet ist, sodass insbesondere kein Teil oder Bestandteil des Befestigungsmittels in den Ausbringungsgutauslauf hineinragt und/oder in diesem angeordnet ist. Das mindestens eine Befestigungsmittel ist also, insbesondere vollständig, räumlich getrennt vom Ausbringungsgutauslauf angeordnet. Dadurch wird vorteilhaft das Ausbringungsgut beim Fördern nicht behindert und es kann unbeeinträchtigt auf den Boden ausgebracht werden. Dieses ungehinderte Verlassen des Ausbringungsgutauslaufs ermöglicht eine verbesserte, insbesondere gleichmäßigere, Verteilung des Ausbringungsguts auf dem Boden, so dass das Aussäergebnis wesentlich verbessert werden kann.

Es kann insbesondere vorgesehen sein, dass das Ausbringungsschar mindestens zwei Befestigungsmittel aufweist, wodurch nicht nur eine verbesserte Befestigung sondern auch eine optimierte Verdrehsicherung der Scharspitze, die erheblichen Dauerbelastungen durch die Kontaktierung mit dem Boden ausgesetzt ist, erreicht werden kann. Alternativ kann auch nur ein einziges Befestigungsmittel angeordnet sein, welches insbesondere mit einer Kodierung zur Erreichung der Verdrehsicherheit ausgestattet sein kann. Es können aber auch drei oder mehr Befestigungsmittel angeordnet sein.

Besonders bevorzugt ist es, wenn mindestens eines der, insbesondere alle, Befestigungsmittel als Planetschraube mit einer Mutter ausgebildet ist. In einer besonders bevorzugten Ausführungsform weist das Ausbringungsschar zwei Befestigungsmittel auf, die als Planetschrauben mit jeweils einer Mutter ausgebildet sind.

Erfindungsgemäß weist der Ausbringungsschuh eine Befestigungsplatte zur Aufnahme des mindestens einen Befestigungsmittels auf. Dadurch ergibt sich eine vereinfachte Montage des Ausbringungsschuhs am Befestigungsstiel und/oder an der Scharspitze. Insbesondere ist die Befestigungsplatte, insbesondere vollständig, außerhalb des Ausbringungsgutauslaufs angeordnet. Die Befestigungsplatte kann insbesondere rückseitig am Befestigungsstiel anliegend angeordnet sein. Die Befestigungsplatte kann, zumindest im Befestigungsbereich, insbesondere parallel zum Befestigungsstiel und/oder zur Scharspitze angeordnet sein, wodurch sich eine besonders einfache Befestigung ergibt. Die Befestigungsplatte wirkt mit dem mindestens einen Befestigungsmittel, insbesondere mit allen Befestigungsmitteln, zusammen, um den Ausbringungsschuh, den Stiel und die Scharspitze miteinander zu verbinden.

Insbesondere kann die Befestigungsplatte eine oder mehrere Aufnahmeöffnungen zur, zumindest teilweisen, Aufnahme des mindestens einen Befestigungsmittels aufweisen. Insbesondere weist die Befestigungsplatte mindestens zwei Aufnahmeöffnungen für mindestens zwei Befestigungsmittel auf, wodurch die Verdrehsicherheit verbessert werden kann.

Erfindungsgemäß weist die Befestigungsplatte in ihrem oberen Bereich eine nach oben offene, insbesondere U-förmige, Aufnahmeöffnung zur Durchführung des mindestens einen Befestigungsmittels, vorzugsweise eines von zwei Befestigungsmitteln, auf. Durch die Öffnung nach oben kann das Befestigungsmittel einfach in die Aufnahmeöffnung eingeschoben werden bzw. die Befestigungsplatte mit der oberen Aufnahmeöffnung auf das zugehörige Befestigungsmittel aufgeschoben werden kann. Dies erleichtert vorteilhaft erheblich die Montage des Ausbringungsschars, des Ausbringungsschuhs, des Befestigungsstiels und/oder der Scharspitze.

Allgemeiner ausgedrückt weist die Befestigungsplatte alternativ eine U-förmige Aufnahmeöffnung auf. Eine Öffnung der Aufnahmeöffnung zum seitlichen Einführen mindestens eines der Befestigungsmittel ist an einer von der weiteren Aufnahmeöffnung abgewandten Seite angeordnet.

Alternativ weist die Befestigungsplatte erfindungsgemäß in ihrem oberen Bereich eine langlochförmige, also geschlossene d.h. nicht nach oben offene, Aufnahmeöffnung auf, insbesondere mit einem breiten oberen Teil und einem schmalen unteren Teil. In dieser Variante kann der Ausbringungsschuh besonders effizient befestigt werden.

Zusätzlich kann die Befestigungsplatte in ihrem unteren Bereich eine als Langloch ausgebildete weitere Aufnahmeöffnung für ein weiteres Befestigungsmittel aufweisen. Dadurch kann erstens die Verdrehsicherheit verbessert und zweitens die Montage erleichtert werden.

Der Befestigungsstiel dient, insbesondere in seinem unteren Bereich, der Halterung bzw. Befestigung des Ausbringungsschuhs und der Scharspitze, wobei der Befestigungsstiel, insbesondere in seinem oberen Bereich, mit weiteren Bestandteilen des Ausbringungsschars, einer Dosiervorrichtung bzw. Drillvorrichtung und/oder einer Zugmaschine verbunden sein kann.

Die Scharspitze dient zum Erzeugen einer Furche im Boden. Die Scharspitze kann insbesondere in der Fahrtrichtung vor dem Ausbringungsschuh angeordnet sein, damit die Furche zunächst erzeugt werden kann und danach das Ausbringungsgut aus dem Ausbringungsschuh in die Furche eingebracht werden kann. Die Scharspitze kann insbesondere in vertikaler Richtung nach unten über den Ausbringungsschuh und/oder den Befestigungsstiel hervorstehen, so dass im Betrieb nur die Scharspitze den Boden berührt. Im Betrieb wirkt auf die Scharspitze eine hohe Belastung durch den Kontakt mit dem Boden, wobei die Scharspitze erfindungsgemäß durch das bzw. die Befestigungsmittel verdrehsicher befestigt ist.

Insbesondere kann es vorgesehen sein, dass sich der Ausbringungsschuh in Fahrtrichtung gesehen hinter der Scharspitze befindet und dass sich der Befestigungsstiel, zumindest mit seinem unteren Ende, zwischen dem Ausbringungsschuh und der Scharspitze befindet.

Insbesondere kann der Befestigungsstiel für jedes Befestigungsmittel eine Durchgangsöffnung aufweisen. Dementsprechend kann auch die Scharspitze, insbesondere in ihrem oberen Bereich, für jedes Befestigungsmittel eine Durchgangsbohrung aufweisen.

Der Ausbringungsschuh kann, insbesondere vollständig, aus einem Metall, beispielsweise Stahlmaterial oder Aluminium, gefertigt sein. Durch die metallartige Ausbildung wird eine ausreichende Festigkeit des Ausbringungsschuhs erzielt. In einer bevorzugten Ausführungsform ist der Ausbringungsschuh teilweise aus einem Kunststoffmaterial und zum anderen Teil aus einem Stahlmaterial oder Aluminium gefertigt. Insbesondere ist der Ausbringungsgutauslauf aus einem Kunststoffmaterial gefertigt. Dadurch können zum einen die Herstellungskosten reduziert werden. Außerdem kann dem Kunststoffmaterial viel einfacher als bei Stahl eine spezielle Form gegeben werden, sodass die Form des Ausbringungsgutauslaufs an die Erfordernisse des auszubringenden Ausbringungsguts angepasst und das Aussäergebnis wesentlich verbessert werden kann. So kann der Ausbringungsgutauslauf leichter und exakter geformt werden, so dass beispielsweise gekrümmte Abschnitte zur besseren Umlenkung des Ausbringungsguts hergestellt werden können.

Zusätzlich kann der Ausbringungsschuh noch einen Verbindungstutzen aufweisen, der mit der Ausbringungsgutzuführung des Ausbringungsschars und/oder der Dosiervorrichtung verbunden ist. Der Verbindungstutzen ist insbesondere oberhalb des Ausbringungsgutauslaufs angeordnet. In einer bevorzugten Ausbildung ist der Verbindungsstutzen aus einem Kunststoffmaterial gefertigt, wodurch die Herstellung vereinfacht werden kann.

Der Ausbringungsgutauslauf aus Kunststoffmaterial kann insbesondere durch eine Klippverbindung oder Schnappverbindung mit den übrigen Teilen des Ausbringungsschuhs aus Stahlmaterial, insbesondere mit der oben genannten Befestigungsplatte aus Stahlmaterial, verbunden werden. Dadurch ergibt sich eine erleichterte Montage des Ausbringungsschars bzw. des Ausbringungsschuhs.

Der Ausbringungsschuh kann insbesondere derart ausgebildet sein, dass der Ausbringungsgutauslauf aus Kunststoff variabel ausgetauscht und durch einen anderen Ausbringungsgutauslauf ersetzt werden kann. Dieser, insbesondere modulartige Aufbau ermöglicht es, dass für unterschiedliche Ausbringungsgutarten die dafür geeignete Formung des Ausbringungsgutauslaufs je nach Bedarf ausgewählt werden kann. Dadurch kann das Ausbringen des Ausbringungsguts weiter optimiert werden.

Ein weiterer Gegenstand der vorliegenden Erfindung betrifft einen Ausbringungsschuh, aufweisend eine Aufnahme zur Befestigung des Ausbringungsschuhs an einem Befestigungsstiel und einer Scharspitze, wobei die Aufnahme außerhalb des Ausbringungsgutauslaufs angeordnet ist.

Die obig genannten Erläuterungen, Definitionen, Vorteile und Ausführungsformen gelten dementsprechend auch für den erfindungsgemäßen Ausbringungsschuh, sodass hiermit wird auf die obigen Ausführungen verwiesen wird.

Weitere Vorteile, Merkmale und Einzelheiten der Erfindung ergeben sich aus der nachfolgenden Beschreibung bevorzugter Ausführungsbeispiele sowie anhand der Zeichnungen.

Die Figuren zeigen schematisch:
- Figur 1: einen Ausschnitt eines erfindungsgemäßen Ausbringungsschars mit einem Ausbringungsschuh gemäß einer ersten Ausführungsform in einer Schnittansicht,
- Figur 2: den Ausbringungsschuh aus Figur 1 in einer perspektivischen Ansicht,
- Figur 3: das Ausbringungsschar aus Figur 1 in einer perspektivischen Ansicht von unten und
- Figur 4: einen Ausbringungsschuh gemäß einer zweiten Ausführungsform in einer perspektivischen Ansicht.

In den Figuren sind gleiche und/oder gleichwirkende Elemente mit den gleichen Bezugszeichen gekennzeichnet.

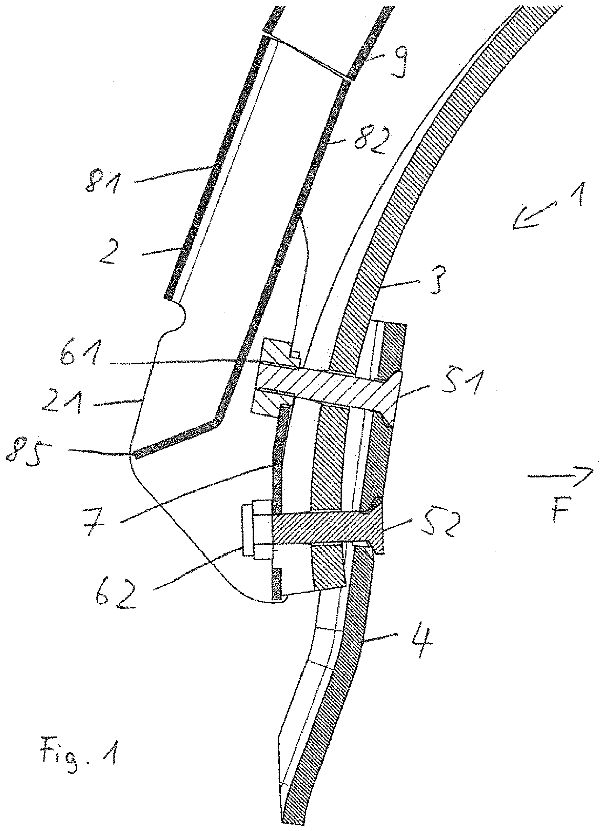

Figur 1 zeigt schematisch einen Ausschnitt eines Ausbringungsschars 1 gemäß einer beispielhaften Ausführungsform. Figur 1 zeigt den unteren Bereich des Ausbringungsschars 1. Das Ausbringungsschar 1 weist eine Scharspitze 4, einen Befestigungsstiel 3 und einen Ausbringungsschuh 2 in einer ersten Ausführungsform auf. Das Ausbringungsschar 1 kann an einer Zugvorrichtung befestigt sein, wobei in der Figur 1 die Fahrtrichtung mit F gekennzeichnet ist.

Die Scharspitze 4 ragt vertikal nach unten in Richtung des Bodens über den Ausbringungsschuh 2 und den Befestigungsstiel 3 hervor. Die Scharspitze 4 erzeugt bei Kontakt mit dem Boden eine Furche, in der Ausbringungsgut abgelegt werden kann.

Die Scharspitze 4 weist Durchgangsöffnungen auf, durch die als Planetenschrauben 51, 52 ausgebildete Befestigungsmittel durchgeführt sind. In Fahrtrichtung gesehen hinter der Scharspitze 4 ist der Befestigungsstiel 3 angeordnet. Der Befestigungsstiel 3 weist zwei korrespondierende Durchgangsöffnungen auf, durch die die Planetenschrauben 51, 52 durchgeführt werden. Hinter dem Befestigungsstiel 3 ist der Ausbringungsschuh 2 angeordnet.

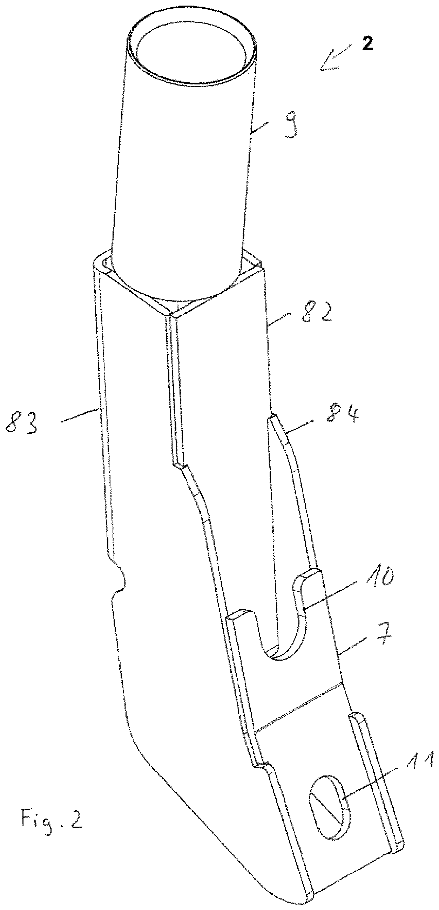

Der Ausbringungsschuh 2 weist einen Rohrstutzen 9 auf, durch den Ausbringungsgut von einem nicht dargestellten Ausbringungsguttank zugeführt werden kann. Das Ausbringungsgut gelangt von oben in den Ausbringungsgutauslauf 21 und tritt unten durch eine Öffnung im Ausbringungsgutauslauf 21 aus dem Ausbringungsschuh aus. In diesem Beispiel ist der Ausbringungsschuh 2 im Querschnitt viereckig ausgebildet. Der Ausbringungsschuh 2 wird von der vorderen Seitenwand 82 und der hinteren Seitenwand 81 sowie zwei weiteren in Figur 2 nicht dargestellten Seitenwänden 83, 84 gebildet. Im unteren Bereich des Ausbringungsgutauslaufs 21 befindet sich eine in Bezug auf die Seitenwand 82 nach oben gebogene Wand 85, die den Ausbringungsgutauslauf 21 nach unten begrenzt.

Der Ausbringungsschuh 2 weist weiterhin eine als Befestigungsplatte 7 ausgebildete Aufnahme zur Aufnahme der Befestigungsmittel auf. Die Befestigungsplatte 7 ist hinter dem Befestigungsstiel 3 angeordnet und verläuft im Wesentlichen parallel zu diesem. In der Befestigungsplatte 7 befindet sich eine untere Aufnahmeöffnung zur Aufnahme der unteren Planetenschraube 52. Die untere Planetschraube 52 wird auf der Seite der Befestigungsplatte 7 mit einer Mutter 62 befestigt. Im oberen Bereich der Befestigungsplatte 7 weist diese eine nach oben offene Aufnahmeöffnung auf, die die obere Planetenschraube 51 zumindest teilweise aufnimmt. Die Befestigungsplatte 7 wird im Bereich der oberen Aufnahmeöffnung über eine Mutter 61 mit der oberen Schraube 51 verbunden.

Erfindungsgemäß befinden sich die Befestigungsmittel, also die Muttern 61, 62 sowie die Schrauben 51, 52 nicht im Ausbringungsgutauslauf 21 des Ausbringungsschuhs 2. Dadurch kann das Ausbringungsgut ungehindert ausgesät werden, wodurch sich ein besseres Aussaatergebnis erzielen lässt.

Erfindungsgemäß erstrecken sich die Befestigungsmittel, also die Schrauben 51, 52 mit den Muttern 61, 62 in einer Befestigungsmittelebene, die durch die Fahrtrichtung F und eine Vertikalrichtung, die sich senkrecht zum bearbeiteten Erdboden erstreckt, aufgespannt wird.

Figur 2 zeigt schematisch den Ausbringungsschuh 2 in einer perspektivischen Ansicht. Im oberen Bereich weist der Ausbringungsschuh 2 den Rohrstutzen 9 auf, durch den Ausbringungsgut von oben, zum Beispiel von einem Ausbringungsguttank, in den Ausbringungsschuh 2 gefördert werden kann.

Im weiteren Verlauf nach unten ist der Ausbringungsschuh im Querschnitt viereckig ausgebildet. Die Seitenwände 83 und 84 bilden zusammen mit den Seitenwänden 82 und 81 den Ausbringungsgutauslauf 21. Im unteren Bereich des Ausbringungsschuhs ist die Befestigungsplatte 7 angeordnet. Im oberen Bereich der Befestigungsplatte 7 ist die Aufnahmeöffnung 10 angeordnet. Im unteren Bereich der Befestigungsplatte 7 ist die untere Aufnahmeöffnung 11 ausgebildet. Die obere Aufnahmeöffnung 10 ist nach oben hin offen, so dass sie im Wesentlichen U-förmig ausgebildet ist. Die untere Aufnahmeöffnung 11 ist als Langloch ausgebildet. Der Ausbringungsschuh 2 kann beispielsweise aus Metall gefertigt sein.

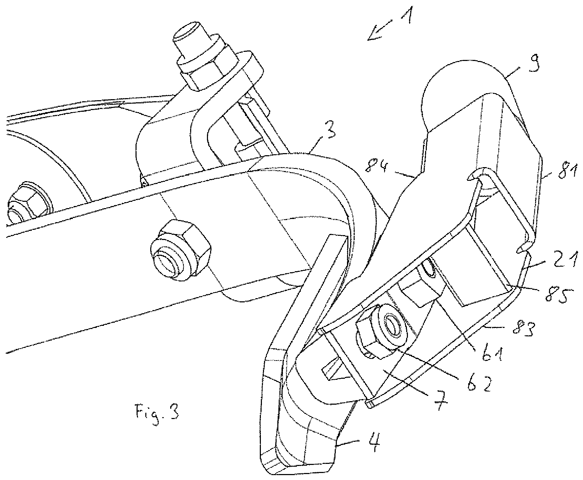

Figur 3 zeigt das Ausbringungsschar 1 aus Figur 1 in einer perspektivischen Ansicht von unten. Die Befestigungsmutter 61 ist vor der Wand 85 angeordnet, die den Ausbringungsgutauslauf 21 nach unten hin begrenzt. Unter der Mutter 61 ist die Mutter 62 angeordnet.

Zur Montage der Scharspitze 4, des Befestigungsstiels 3 und des Ausbringungsschuhs 2 werden u.a. folgende Schritte durchgeführt. In einem ersten Schritt wird die Scharspitze 4 mit ihrem oberen Durchgangsloch über die Planetenschraube 51 und die Mutter 61 mit dem Befestigungsstiel 3 verbunden bzw. verschraubt. Danach wird der Ausbringungsschuh 2 mit der nach oben offenen Aufnahmeöffnung 10 von unten nach oben auf die Planetenschraube 51 aufgeschoben und danach wird die untere Schraube 52 durch die korrespondierenden Öffnungen der Scharspitze 4, des Befestigungsstiels 3 und der Befestigungsplatte 7 durchgeführt und auf der Seite der Befestigungsplatte 7 mit der Mutter 62 befestigt. Dieses hat den Vorteil, dass die Scharspitze 4 und der Befestigungsstiel 3 bereits fertig vormontiert werden können.

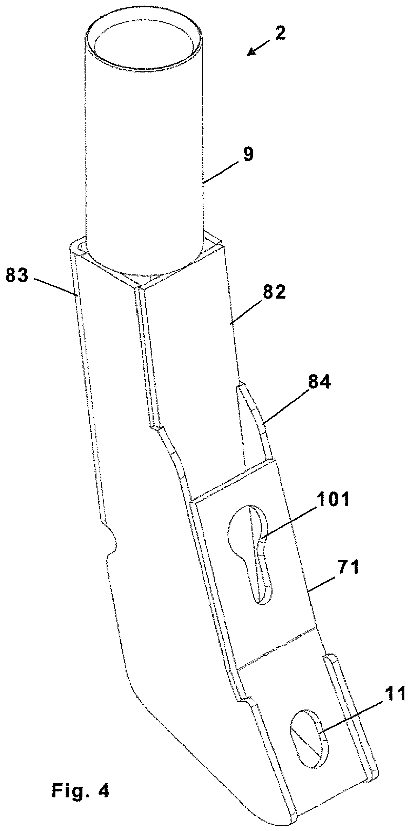

Figur 4 zeigt schematisch einen Ausbringungsschuh 2 gemäß einer zweiten beispielhaften Ausführungsform. In dieser Ausführungsform weist eine Befestigungsplatte 71, die im Wesentlichen der Befestigungsplatte 7 aus den Figuren 1 bis 3 entspricht, eine langlochförmige, d.h. geschlossene bzw. nicht nach oben offene, Aufnahmeöffnung 101 auf. Die Aufnahmeöffnung 101 weist einen oberen Teil und einen unteren Teil auf, wobei der obere Teil breiter ist als der untere Teil. Zur Montage wird der Ausbringungsschuh 2 mit dem breiteren Teil der Aufnahmeöffnung 101 auf die Planetenschraube 51 aufgeschoben und von unten nach oben geführt, damit die Planetenschraube 51 im unteren, schmaleren Teil befestigt werden kann. Im Übrigen wird auf die Ausführungen zu den Figuren 1 bis 3 verwiesen.

### Bezugszeichenliste

- 1: Ausbringungsschar
- 2: Ausbringungsschuh
- 21: Ausbringungsgutauslauf
- 3: Befestigungsstiel
- 4: Scharspitze
- 51, 52: Planetenschrauben
- 61, 62: Muttern
- 7, 71: Befestigungsplatte
- 81, 82: Seitenwand
- 83, 84: Seitenwand
- 85: Wand
- 9: Rohrstutzen
- 10, 11: Aufnahmeöffnung
- 101: Aufnahmeöffnung
- F: Fahrtrichtung

## Patentansprüche

1. Ausbringungsschar (1) zur Ausbringung eines Ausbringungsgutes, insbesondere eines Saatgutes und/oder Düngemittels, aufweisend:
- einen Ausbringungsschuh (2) mit einem Ausbringungsgutauslauf (21),
- einen Befestigungsstiel (3),
- eine Scharspitze (4),
- mindestens ein Befestigungsmittel (51, 52, 61, 62) zur verdrehsicheren Befestigung der Scharspitze (4) am Befestigungsstiel (3) und am Ausbringungsschuh (2), wobei sich das mindestens eine Befestigungsmittel (51, 52, 61, 62) in einer durch eine Vertikalrichtung und die Fahrtrichtung (F) aufgespannten Befestigungsmittelebene erstreckt,
wobei
das mindestens eine Befestigungsmittel (51, 52, 61, 62) außerhalb des Ausbringungsgutauslaufs (21) angeordnet ist, **dadurch gekennzeichnet, dass** der Ausbringungsschuh (2) eine, insbesondere quer zur Befestigungsmittelebene verlaufende, Befestigungsplatte (7, 71) zur Aufnahme des mindestens einen Befestigungsmittels (51, 52, 61, 62) aufweist, wobei die Befestigungsplatte (7) in ihrem oberen Bereich eine nach oben offene, insbesondere U-förmige, Aufnahmeöffnung (10) zur Durchführung des mindestens einen Befestigungsmittels (51, 52, 61, 62) aufweist oder wobei die Befestigungsplatte (71) in ihrem oberen Bereich eine langlochförmige Aufnahmeöffnung (101) aufweist mit einem breiten oberen Teil und einem schmalen unteren Teil.

2. Ausbringungsschar (1) nach Anspruch 1, **dadurch gekennzeichnet, dass** die Befestigungsplatte (7, 71) zumindest teilweise, insbesondere überwiegend, vorzugsweise vollständig außerhalb des Ausbringungsgutauslaufs (21) angeordnet ist.

3. Ausbringungsschar (1) nach Anspruch 1 oder 2, **dadurch gekennzeichnet, dass** die Befestigungsplatte (7, 71) zusätzlich in ihrem unteren Bereich eine als Langloch ausgebildete weitere Aufnahmeöffnung (11) für ein weiteres Befestigungsmittel (51, 52, 61, 62) aufweist.

4. Ausbringungsschar (1) nach einem der Ansprüche 1 bis 3, **dadurch gekennzeichnet, dass** die Befestigungsplatte (7, 71) rückseitig am Befestigungsstiel (3) anliegt und insbesondere zumindest in einem Befestigungsbereich parallel zum Befestigungsstiel (3) und/oder zur Scharspitze (4) angeordnet ist.

5. Ausbringungsschar (1) nach einem der vorhergehenden Ansprüche, aufweisend mindestens zwei Befestigungsmittel (51, 52, 61, 62) zur Befestigung der Scharspitze (4).

6. Ausbringungsschar (1) nach einem der vorhergehenden Ansprüche, **dadurch gekennzeichnet, dass** zumindest der Ausbringungsgutauslauf (21) aus einem Kunststoffmaterial gefertigt ist, wobei der Ausbringungsgutauslauf (21), insbesondere mit einer Klippverbindung oder Schnappverbindung, mit den übrigen Bestandteilen des Ausbringungsschuhs (2) aus einem Stahlmaterial verbunden ist.

7. Ausbringungsschar (1) nach Anspruch 6, **dadurch gekennzeichnet, dass** der Ausbringungsgutauslauf (21) durch einen modulartigen Aufbau des Ausbringungsschuhs (2) variabel austauschbar ausgebildet ist.

8. Ausbringungsschuh (2) mit einem Ausbringungsgutauslauf (21), aufweisend eine Befestigungsplatte (7, 71) zur Befestigung des Ausbringungsschuhs (2) an einem Befestigungsstiel (3) und einer Scharspitze (4),
wobei die Befestigungsplatte (7, 71) außerhalb des Ausbringungsgutauslaufs (21) angeordnet ist, **dadurch gekennzeichnet, dass** die Befestigungsplatte (7) in ihrem oberen Bereich eine nach oben offene, insbesondere U-förmige, Aufnahmeöffnung (10) zur Durchführung mindestens eines Befestigungsmittels (51, 52, 61, 62) aufweist, wobei das mindestens eine Befestigungsmittels (51, 52, 61, 62) außerhalb des Ausbringungsgutauslaufs (21) anordenbar ist und wobei sich das mindestens eine Befestigungsmittel (51, 52, 61, 62) in einer durch eine Vertikalrichtung und eine Fahrtrichtung (F) aufgespannten Befestigungsmittelebene erstrecken kann, oder dass die Befestigungsplatte (71) in ihrem oberen Bereich eine langlochförmige Aufnahmeöffnung (101) aufweist mit einem breiten oberen Teil und einem schmalen unteren Teil.

## Claims

1. An output coulter (1) for outputting an output product, in particular seeds and/or fertiliser, having:
- an output shoe (2) with an output product outlet (21),
- a fastening stem (3),
- a coulter tip (4),
- at least one fastening means (51, 52, 61, 62) for the rotationally-secure fastening of the coulter tip (4) on the fastening stem (3) and on the output shoe (2), wherein the at least one fastening means (51, 52, 61, 62) extends in a fastening means plane defined by a vertical direction and the travelling direction (F),
wherein
the at least one fastening means (51, 52, 61, 62) is arranged outside the output product outlet (21), **characterized in that** the output shoe (2) has a fastening plate (7, 71) running in particular transversely to the fastening means plane for receiving the at least one fastening means (51, 52, 61, 62), wherein the fastening plate (7) in its upper region has an in particular U-shaped receiving opening (10) that is open towards the top for passing through the at least one fastening means (51, 52, 61, 62) or wherein the fastening plate (71) in its upper region has an elongated hole-like receiving opening (101) with a wide upper part and a narrow lower part.

2. The output coulter (1) according to Claim 1, **characterized in that** the fastening plate (7, 71) is at least partially, in particular predominantly, preferentially completely arranged outside the output product outlet (21).

3. The output coulter (1) according to Claim 1 or 2, **characterized in that** the fastening plate (7, 71), in its lower region additionally has a further receiving opening (11) formed as elongated hole for a further fastening means (51, 52, 61, 62).

4. The output coulter (1) according to any one of the Claims 1 to 3, **characterized in that** the fastening plate (7, 71) lies against the fastening stem (3) at the back and is arranged in particular at least in a fastening region parallel to the fastening stem (3) and/or to the coulter tip (4).

5. The output coulter (1) according to any one of the preceding claims, having at least two fastening means (51, 52, 61, 62) for fastening the coulter tip (4).

6. The output coulter (1) according to any one of the preceding claims, **characterized in that** at least the output product outlet (21) is produced from a plastic material, wherein the output product outlet (21) is connected in particular with a clip-on connection or snap-on connection to the remaining components of the output shoe (2) of a steel material.

7. The output coulter (1) according to Claim 6, **characterized in that** the output product outlet (21) is formed variably interchangeably by a modular structure of the output shoe (2).

8. An output shoe (2) with an output product outlet (21), comprising a fastening plate (7, 71) for fastening the output shoe (2) to a fastening stem (3) and a coulter tip (4),
wherein the fastening plate (7, 71) is arranged outside the output product outlet (21), **characterized in that** the fastening plate (7) in its upper region has an in particular U-shaped receiving opening (10) that is open towards the top for passing through at least one fastening means (51, 52, 61, 62), wherein the at least one fastening means (51, 52, 61, 62) can be arranged outside the output product outlet (21) and wherein the at least one fastening means (51, 52, 61, 62) can extend in a fastening means plane defined by a vertical direction and a travelling direction (F), or **in that** the fastening plane (71) in its upper region has an elongated hole-like receiving opening (101) with a wide upper part and a narrow lower part.

## Revendications

1. Soc d'épandage (1) pour l'épandage d'un produit à épandre, en particulier d'une semence et/ou d'un engrais, présentant :
- un sabot d'épandage (2) doté d'une sortie de produit à épandre (21),
- une tige de fixation (3),
- une pointe de soc (4),
- au moins un moyen de fixation (51, 52, 61, 62) pour la fixation anti-torsion de la pointe de soc (4) à la tige de fixation (3) et au sabot d'épandage (2), dans lequel l'au moins un moyen de fixation (51, 52, 61, 62) s'étend dans un plan de moyen de fixation sous-tendu par un sens vertical et le sens de circulation (F),
dans lequel
l'au moins un moyen de fixation (51, 52, 61, 62) est disposé en dehors de la sortie de produit à épandre (21), **caractérisé en ce que** le sabot d'épandage (2) présente une plaque de fixation (7, 71) s'étendant en particulier transversalement au plan du moyen de fixation et destiné à recevoir l'au moins un moyen de fixation (51, 52, 61, 62), la plaque de fixation (7) présentant dans sa partie supérieure un orifice récepteur (10) ouvert vers le haut, en particulier en forme de U, pour réaliser l'au moins un moyen de fixation (51, 52, 61, 62) ou la plaque de fixation (71) présentant dans sa partie supérieure un orifice récepteur en forme de trou oblong (101) doté d'une partie supérieure large et d'une partie inférieure étroite.

2. Soc d'épandage (1) selon la revendication 1, **caractérisé en ce que** la plaque de fixation (7, 71) est disposée au moins partiellement, en particulier majoritairement, de préférence intégralement, en dehors de la sortie de produit à épandre (21).

3. Soc d'épandage (1) selon la revendication 1 ou 2, **caractérisé en ce que** la plaque de fixation (7, 71) présente en outre dans sa partie inférieure dans un autre orifice récepteur (11) réalisé sous forme d'un trou oblong pour un autre moyen de fixation (51, 52, 61, 62).

4. Soc d'épandage (1) selon une des revendications 1 à 3, **caractérisé en ce que** la plaque de fixation (7, 71) repose sur l'arrière de la tige de fixation (3) et est en particulier disposée, du moins dans une zone de fixation, parallèlement à la tige de fixation (3) et/ou à la pointe de soc (4).

5. Soc d'épandage (1) selon une des revendications précédentes, présentant au moins deux moyens de fixation (51, 52, 61, 62) pour la fixation de la pointe de soc (4).

6. Soc d'épandage (1) selon une des revendications précédentes, **caractérisé en ce qu'**au moins la sortie de produit à épandre (21) est fabriquée dans une matière plastique, la sortie de produit à épandre (21) étant raccordée en particulier par un raccordement clipsé ou un raccordement enclenché au reste des composantes du sabot d'épandage (2) en matériau d'acier.

7. Soc d'épandage (1) selon la revendication 6, **caractérisé en ce que** la sortie de produit à épandre (21) est constituée de manière à être échangeable de façon variable par une structure de type modulaire du sabot d'épandage (2).

8. Sabot d'épandage (2) comportant une sortie de produit à épandre (21), présentant une plaque de fixation (7, 71) pour la fixation du sabot d'épandage (2) à une tige de fixation (3) et une pointe de soc (4),
dans lequel la plaque de fixation (7, 71) est disposée en dehors de la sortie de produit à épandre (21), **caractérisé en ce que** la plaque de fixation (7) présente dans sa partie supérieure un orifice récepteur (10) ouvert vers le haut, en particulier en forme de U, pour la réalisation d'au moins un moyen de fixation (51, 52, 61, 62), l'au moins un moyen de fixation (51, 52, 61, 62) pouvant être disposé en dehors de la sortie de produit à épandre (21) et l'au moins un moyen de fixation (51, 52, 61, 62) pouvant s'étendre dans un plan de moyen de fixation sous-tendu par un sens vertical et un sens de circulation (F) ou que la plaque de fixation (71) présente dans sa partie supérieure un orifice récepteur en forme de trous oblong (101) doté d'une partie supérieure large et d'une partie inférieure étroite.
